# FASCICULE DE BREVET EUROPEEN

(11) **EP 0 832 799 B1**
(45) Date de publication et mention de la délivrance du brevet: **02.01.2002**
(21) Numéro de dépôt: 97116706.9
(22) Date de dépôt: 25.09.1997
(51) Int. Cl.: B60S 1/34

(54) **Dispositif d'essuyage d'une vitre de véhicule automobile comportant un dispositif perfectionné d'orientation d'un arbre d'entraînement**
Kraftfahrzeugscheibenwischer mit einer verbesserten Vorrichtung zur Orientierung der Wischerwelle
Vehicle windscreen wiper with an improved device for orientation of the wiper shaft

(30) Priorité: 30.09.1996 FR 9611988
(43) Date de publication de la demande: 01.04.1998
(73) Titulaire: VALEO SYSTEMES D'ESSUYAGE, 78321 La Verrière (FR)
(72) Inventeur: Eustache, Jean-Pierre, 92 160 Antony (FR)
(74) Mandataire: Kohn, Philippe

(56) Documents cités:
- DE-A- 3 900 525
- FR-A- 2 742 114
- GB-A- 761 619
- US-A- 2 790 989

## Description

L'invention concerne un dispositif d'essuyage d'une vitre de véhicule automobile comportant un dispositif perfectionné d'orientation d'un arbre d'entraînement.

L'invention concerne plus particulièrement un dispositif d'essuyage d'une vitre de véhicule automobile, du type dans lequel un essuie-glace est monté à l'extrémité supérieure d'un arbre d'entraînement qui est entraîné en rotation alternée autour de son axe par un dispositif moteur, et du type dans lequel il est prévu un dispositif pour faire varier l'inclinaison de l'axe de l'arbre par rapport à un axe de référence sensiblement perpendiculaire au plan de la vitre.

Dans un tel dispositif, l'essuie-glace porte une raclette d'essuyage en matériau élastomère souple qu'il plaque contre la vitre à essuyer et qu'il entraîne dans un mouvement de balayage rotatif alterné.

Les vitres de véhicule automobile, et plus particulièrement les pare-brise, sont généralement galbées de sorte qu'il est nécessaire que l'essuie-glace comporte un balai d'essuie-glace muni d'une structure articulée apte à imposer à la raclette d'essuyage d'être en contact sur toute sa longueur avec la vitre. La structure articulée permet en outre d'assurer que la pression de contact de la raclette d'essuyage contre la vitre soit sensiblement homogène sur toute la longueur de la raclette et, à cet effet, la structure articulée est déformable dans un plan qui est sensiblement perpendiculaire à la vitre à essuyer et elle maintient, à l'aide de griffes, la raclette dans ce plan de déformation.

Toutefois, lorsque le balai d'essuie-glace parcourt la vitre dans son mouvement de balayage rotatif alterné, le plan de déformation de sa structure articulée ne reste pas rigoureusement perpendiculaire au plan de la vitre à essuyer, du fait du galbe de la vitre, si bien que la raclette est en contact avec la vitre selon un angle qui varie en fonction de la position de l'essuie-glace.

Or, il est apparu qu'une telle inclinaison de la raclette nuit de manière importante à la qualité d'essuyage du balai d'essuie-glace.

Un cas particulièrement défavorable est le cas où, s'agissant d'un pare-brise de véhicule automobile, l'essuie-glace est conçu pour essuyer une extrémité latérale du pare-brise recourbée vers l'arrière en arrivant sensiblement parallèlement au montant latéral du pare-brise. L'angle d'inclinaison de la raclette par rapport à la vitre est alors important et peut nuire à l'efficacité de l'essuie-glace dans cette zone.

Dans le but d'apporter une solution à ce problème, le document DE-A-3.900.525 propose un essuie-glace du type décrit précédemment selon la préambule de la revendication 1 du type dans lequel l'arbre d'entraînement est monté pivotant autour d'au moins un axe qui est perpendiculaire à l'axe de l'arbre, et dans lequel il est prévu un dispositif à came qui commande le pivotement de l'arbre d'entraînement pour faire varier l'inclinaison de son axe par rapport à l'axe de référence en fonction de la position de l'arbre autour de son axe de rotation.

Une solution analogue est décrite et représentée dans le document GB-A-761.619.

Dans ces différentes conceptions selon l'état de la technique, on constate que l'axe de pivotement de l'arbre d'entraînement est mobile par rapport au corps de palier et qu'il en résulte un mouvement complexe de l'arbre d'entraînement dans l'espace, et notamment par rapport à la vitre à essuyer, qui provoque des variations de la force d'appui exercée par l'essuie-glace sur la vitre à essuyer.

L'invention vise à proposer un dispositif d'essuie-glace qui remédie à ces inconvénients afin de respecter les contraintes d'essuyage, et notamment les surfaces essuyées.

Dans ce but, l'invention propose un dispositif d'essuie-glace, caractérisé en ce en ce que l'arbre est monté pivotant autour d'un axe fixe unique qui est perpendiculaire à l'axe de l'arbre, et en ce qu'il est prévu des moyens de guidage complémentaire de l'arbre qui limitent le pivotement de l'arbre dans le corps de palier à un pivotement dans un plan contenant l'axe de référence.

Selon d'autres caractéristiques de l'invention :
- l'arbre porte un suiveur de came qui est monté à rotation par rapport à l'arbre autour de l'axe de l'arbre et qui est immobilisé en rotation autour de cet axe par rapport au corps de palier, et le suiveur de came est en appui contre une surface de came qui est mobile en rotation dans le corps de palier et dont les déplacements sont commandés en fonction de la rotation de l'arbre autour de son axe ;
- la surface de came est portée par un disque qui est monté à rotation dans le corps de palier autour de l'axe de référence ;
- la surface de came possède un profil variable selon la position angulaire autour de l'axe de référence ;
- le suiveur de came comporte un levier qui est monté à rotation à l'extrémité inférieure de l'arbre d'entraînement, perpendiculairement à l'axe de l'arbre, qui est guidé dans le corps de palier selon une trajectoire contenue dans un plan parallèle à l'axe de référence, et dont une extrémité libre est en appui contre la surface de came ;
- l'arbre d'entraînement comporte un maneton perpendiculaire à l'extrémité libre duquel est agencé un doigt d'entraînement qui est destiné à être reçu dans une lumière de direction radiale du disque support de la surface de came de manière à entraîner le disque en rotation autour de l'axe de référence en fonction de la position de l'arbre autour de son axe ;
- le dispositif à came possède une surface de came qui est portée par le corps de palier, son profil varie selon une direction radiale par rapport à l'axe de référence, et l'arbre d'entraînement porte un suiveur de came qui s'appuie en au moins deux points sur la surface de came ;
- le suiveur de came comporte deux points d'appui diamétralement opposés par rapport à l'axe de rotation de l'arbre ;
- le dispositif comporte deux galets diamétralement opposés par rapport à l'axe de référence ;
- le dispositif à came possède une surface de came qui est montée fixe sur l'arbre de manière à tourner avec lui autour de son axe, le profil de la surface de came varie selon la direction radiale de l'arbre en fonction de la position angulaire de la portion de surface de came considérée autour de l'axe de l'arbre, et la surface de came est en appui contre au moins deux point fixes par rapport au corps de palier ;
- la surface de came est en appui contre des galets qui sont montés à rotation par rapport au corps de palier autour d'un axe sensiblement parallèle à l'axe de référence ;
- l'un au moins des galets est monté mobile selon une direction sensiblement perpendiculaire à la surface de came, et le galet est sollicité par des moyens de rappel élastique en direction de la surface de came ;
- l'arbre d'entraînement est monté dans le corps de palier par l'intermédiaire d'une articulation à rotule ; et
- l'arbre d'entraînement est monté dans le corps de palier par l'intermédiaire d'une liaison à pivot autour dudit axe fixe unique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'un premier mode de réalisation d'un mécanisme conforme aux enseignements de l'invention pour provoquer l'inclinaison d'un arbre d'entraînement en fonction de sa position angulaire ;
- la figure 2 est une vue similaire à celle de la figure 1 dans laquelle le dispositif est représenté lorsque l'arbre d'entraînement occupe une deuxième position angulaire autour de son axe ;
- la figure 3 est une vue similaire à celle de la figure 1 illustrant un deuxième mode de réalisation de l'invention ;
- la figure 4 est une vue en perspective éclatée et à plus grande échelle d'un détail du deuxième mode de réalisation de l'invention ;
- la figure 5 est une vue en coupe selon la ligne 5-5 de la figure 3 ;
- la figure 6 est une vue en coupe axiale illustrant un troisième mode de réalisation de l'invention ;
- la figure 7 est une vue en coupe selon la ligne 7-7 de la figure 6 ;
- la figure 8 est une vue en coupe selon la ligne 8-8 de la figure 6 ;
- la figure 9 est une vue en coupe axiale d'un quatrième mode de réalisation de l'invention ; et
- la figure 10 est une vue en coupe selon la ligne 10-10 de la figure 9.

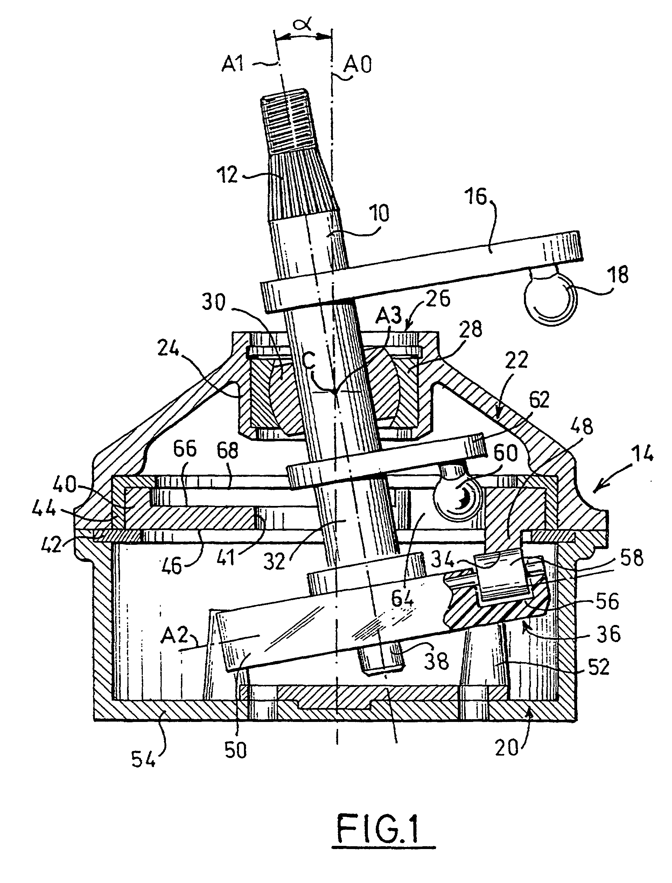

On a représenté sur la figure 1 un arbre d'entraînement 10 d'un dispositif d'essuyage d'une vitre (non représentée) de véhicule automobile.

Un essuie-glace (non représenté) est destiné à être monté à l'extrémité supérieure 12 de l'arbre 10 de manière à être entraîné dans un mouvement de balayage rotatif alterné autour de l'axe A1 de l'arbre 10, lequel est guidé dans un corps de palier 14 qui est destiné à être agencé à proximité de la vitre à essuyer, du côté interne d'un panneau de carrosserie (non représenté) au travers duquel dépasse seulement l'extrémité supérieure 12 de l'arbre 10.

Pour assurer son entraînement en rotation autour de son axe A1, l'arbre d'entraînement 10 comporte une manivelle de commande 16 qui s'étend sensiblement perpendiculairement à l'axe A1 et qui est fixée sur l'arbre 10 au-dessus d'une partie inférieure 32 de l'arbre qui s'étend à l'intérieur du corps de palier 14. De manière connue, la manivelle de commande 16 comporte à son extrémité libre une rotule de liaison 18 qui est reliée par l'intermédiaire d'une tringlerie (non représentée) à un groupe motoréducteur qui assure l'entraînement du dispositif d'essuyage.

Conformément aux enseignements de l'invention, le corps de palier 14 renferme un mécanisme qui assure le guidage de l'arbre 10 en rotation autour de son axe A1 et qui provoque une variation de l'inclinaison de l'axe A1 de l'arbre 10 par rapport à un axe de référence A0, fixe par rapport au corps de palier 14, et donc par rapport à la vitre du véhicule, en fonction de la position angulaire de l'arbre d'entraînement 10 autour de son axe A1, position qui lui est imposée par le groupe motoréducteur qui agit sur la manivelle de commande 16.

Le corps de palier 14 comporte un boîtier inférieur 20 et un boîtier supérieur 22 qui sont destinés à être accolés selon un plan sensiblement médian et perpendiculaire à l'axe A0 de référence.

Le boîtier supérieur 22 présente sensiblement une forme de coupe renversée et son extrémité supérieure porte un manchon tubulaire 24 d'axe A0 au travers duquel est monté l'arbre 10 par l'intermédiaire d'une articulation à rotule 26 dont la bague externe 28 est fixée dans le manchon 24 et dont la bague interne 28 est solidaire de l'arbre 10, sensiblement au milieu de celui-ci selon la direction de son axe A1.

De la sorte, l'articulation à rotule 26 assure un montage pivotant de l'arbre 10 par rapport au corps de palier 14 autour du centre C de l'articulation 26 qui est le point d'intersection de l'axe A0 de référence et l'axe A1 de l'arbre 10.

La partie inférieure 32 de l'arbre 10, qui s'étend en dessous du point C de pivotement, s'étend donc à l'intérieur du corps de palier 14.

Conformément aux enseignements de l'invention, un dispositif à came permet de commander J'inclinaison de l'axe A1 de l'arbre 10 par rapport à l'arbre A0 de référence par pivotement de l'arbre 10 autour du point C, centre de l'articulation à rotule 26.

Dans ce premier exemple de réalisation, un profil de came mobile 34 coopère avec un suiveur de came 36 qui est solidaire de l'extrémité inférieure 38 de l'arbre 10.

Plus précisément, un disque support de came 40 est monté à rotation autour de l'axe A0 de référence dans le corps de palier 14. A cet effet, le disque support 40 est serré axialement entre deux bagues antifriction 42, 44 qui sont portées chacune respectivement par le boîtier inférieur 20 et le boîtier supérieur 22.

La bague antifriction inférieure 42 est de forme annulaire et assure la retenue du disque support 40 axialement vers le bas. La bague antifriction supérieure 44 présente en section radiale une forme de cornière de manière à guider le disque support 40 à la fois radialement et axialement vers le haut. Le disque support 40 est maintenu entre les bagues antifriction 42, 44 lorsque les boîtiers inférieur 20 et supérieur 22 sont assemblés.

La partie inférieure 32 de l'arbre 10 traverse le disque support 40 au travers d'un orifice circulaire 41 d'axe A0 aménagé dans le disque 40, de sorte que l'extrémité inférieure 38 de l'arbre 10 s'étend en dessous du disque support 40.

Le disque support 40 comporte, sur sa face inférieure 46, une came 48 qui s'étend selon une portion d'anneau d'axe A0 et dont une face inférieure forme le profil de came 34.

Le suiveur de came 36 est constitué essentiellement d'un levier 50 qui s'étend sensiblement perpendiculairement à l'axe A1 de l'arbre 10 à l'extrémité inférieure 38 duquel il est monté à rotation par sa partie centrale.

Le levier 50, de forme générale prismatique, est guidé selon un plan vertical contenant l'axe A0 de référence par quatre plots 52 qui s'étendent verticalement vers le haut depuis une paroi transversale de fond 54 du boîtier inférieur 20.

De ce fait l'extrémité inférieure 38 de l'arbre 10 ne peut se déplacer que dans le plan vertical contenant l'axe A0 de référence qui est défini par la coopération du levier 50 et des quatre plots 52. L'axe A1 de l'arbre 10 se déplace donc dans un plan vertical, par pivotement autour d'un axe fixe A3 qui est perpendiculaire à l'axe A0 de référence, et au plan vertical défini par la coopération du levier 50 et des quatre plots 52, et qui passe par le point C centre de l'articulation à rotule 26.

Ainsi, on évite les variations de la force d'appui exercée par l'essuie-glace sur la vitre à essuyer et on respecte les contraintes d'essuyage, notamment les surfaces essuyées.

Une extrémité libre 56 du levier 50 porte un rouleau 58 qui est monté à rotation autour d'un axe sensiblement parallèle à la direction générale A2 du levier 50 et qui est en appui contre le profil de came 34.

On peut prévoir que l'extrémité libre 56 du levier 50 soit sollicitée contre le profil de came 34 par des moyens de rappel élastiques (non représentés) qui peuvent par exemple être interposés entre le levier 50 et la paroi transversale de fond 54 du boîtier inférieur 20.

En fonction de la hauteur de la came 48, c'est-à-dire en fonction de la distance séparant la surface inférieure formant profil de came 34 de la surface inférieure 46 du disque support 40, la position verticale de l'extrémité libre 56 du levier 50 varie, ce qui provoque un pivotement autour de l'axe A3 du levier 50 et de l'arbre d'entraînement 10.

Il en résulte donc une variation de l'angle α d'inclinaison de l'axe A1 de l'arbre 10 par rapport à l'axe de référence A0.

Afin que la variation de l'angle d'inclinaison α de l'arbre d'entraînement 10 soit une fonction de la position angulaire de l'arbre 10 autour de son axe A1, il est donc nécessaire que la came 48 et son disque support 40 tournent en même temps que l'arbre 10.

Toutefois, le disque support 40 est monté à rotation autour de l'axe A0 de référence tandis que l'arbre 10 tourne autour de son axe A1 qui n'est pas forcément confondu avec l'axe de référence A0. Aussi, la liaison en rotation de l'arbre 10 et du disque support 40 est assurée par l'intermédiaire d'un doigt de liaison 60 qui s'étend parallèlement à l'axe A1, vers le bas, depuis l'extrémité libre d'un maneton 62 qui est monté solidaire de l'arbre 10 au-dessus du disque support 40, mais en dessous de l'articulation à rotule 26.

Le doigt de liaison 60 est reçu dans une lumière d'orientation radiale 64 qui est agencée dans le disque support 40 de manière à autoriser un débattement du doigt 60 dans la lumière 64 selon la direction radiale mais de manière à interdire tout débattement du doigt 60 selon une direction tangentielle par rapport à l'axe A0.

Ainsi, lorsque l'arbre 10 pivote autour de l'axe A3 sous l'effet de la coopération du profil de came 34 et du suiveur de came 36, le doigt 60 se déplace suivant la direction radiale dans la lumière 64 mais, lorsque l'arbre 10 est entraîné en rotation autour de son axe A1 par la manivelle de commande 16, le maneton de liaison 62 provoque une rotation simultanée du disque 40 autour de l'axe de référence A0 par la coopération du doigt 60 avec la lumière 64.

De préférence, l'extrémité inférieure du doigt de liaison 60 est réalisée sous la forme d'une sphère.

Par ailleurs, le diamètre de l'orifice circulaire 41 du disque support 40 est plus grand que celui de l'arbre 10 pour permettre un débattement de l'arbre 10 autour du centre C de l'articulation à rotule 26 sans interférence avec l'orifice 41.

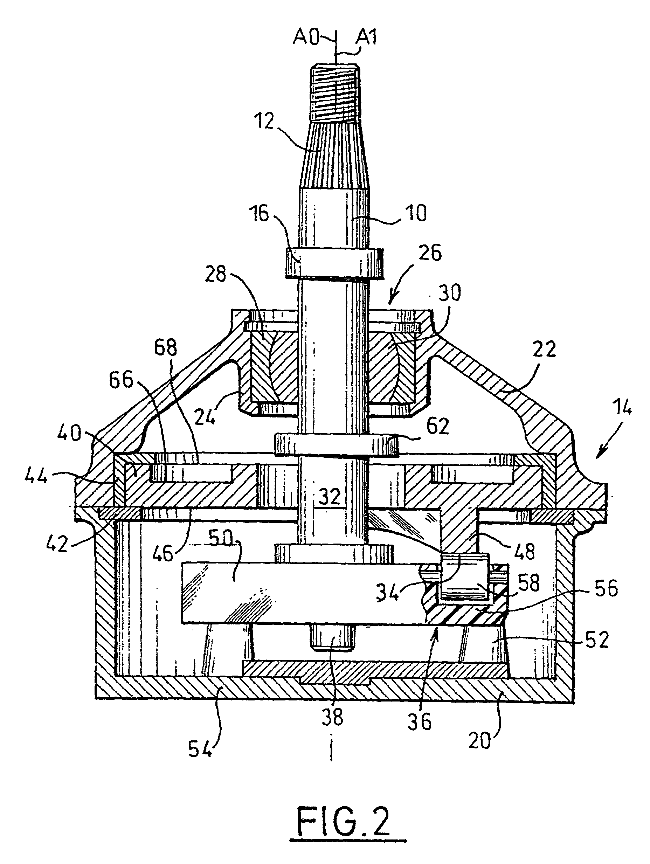

Comme on peut le voir sur les figures 1 et 2, le disque support 40 comporte un évidement 66 aménagé dans sa face supérieure 68, sauf autour de la lumière 64 qui s'étend sur toute la hauteur du disque support 40 et sauf sur la périphérie du disque qui coopère avec les bagues antifriction 42, 44.

On a représenté sur la figure 2 le dispositif de la figure 1 lorsque l'arbre d'entraînement 10 a été pivoté d'environ un quart de tour autour de son axe A1 par la manivelle de commande 16.

La figure 2 est une vue en coupe axiale selon le même plan de coupe que la figure 1, plan qui est défini par la position des plots 52 de guidage du levier 50 dans le corps de palier 14.

Le doigt de liaison 60 du maneton 62 a donc provoqué une rotation simultanée du disque support 40 et de la came 48 autour de l'axe A0 de référence de sorte que c'est une autre partie de la came 48 qui coopère avec le rouleau 58 du levier 50, qui lui est resté dans le même plan par rapport au corps de palier 14.

Comme on peut le voir sur la figure 2, la hauteur de la came 48 dans cette partie est plus importante de sorte que le rouleau 58 a été repoussé vers le bas et que le levier 50 et l'arbre 10 ont pivoté autour de l'axe A3 jusqu'à ce que l'arbre 10 ait atteint une position dans laquelle son axe A1 est sensiblement confondu avec l'axe A0 de référence.

Avantageusement, le profil 34 de la came 48 est adapté pour compenser au mieux les variations d'orientation de la lame par rapport à la vitre, en fonction du galbe de celle-ci. Ainsi, la variation de hauteur du profil de came n'est pas forcément proportionnelle à la rotation de la came autour de l'axe A0.

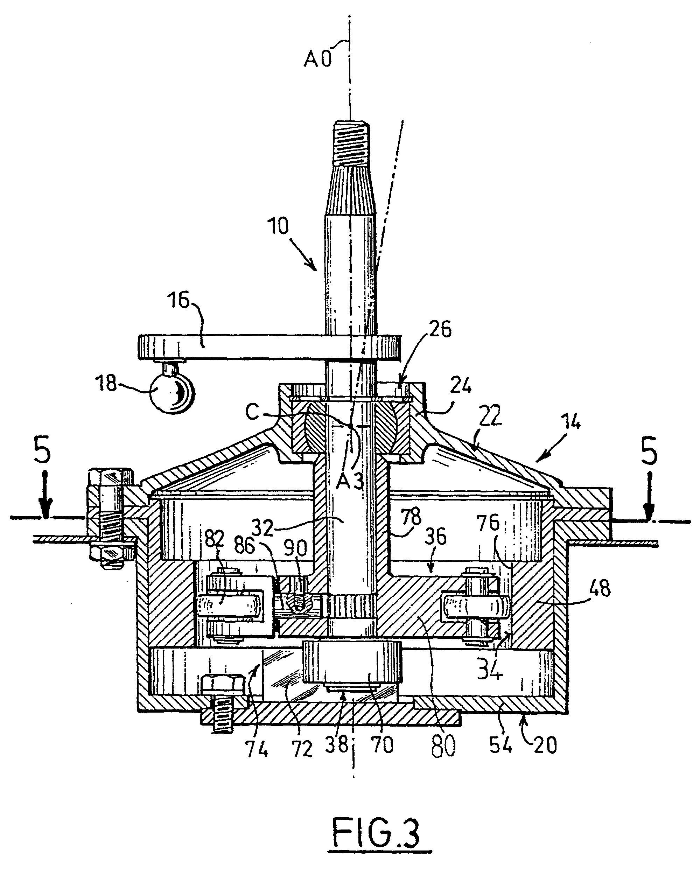

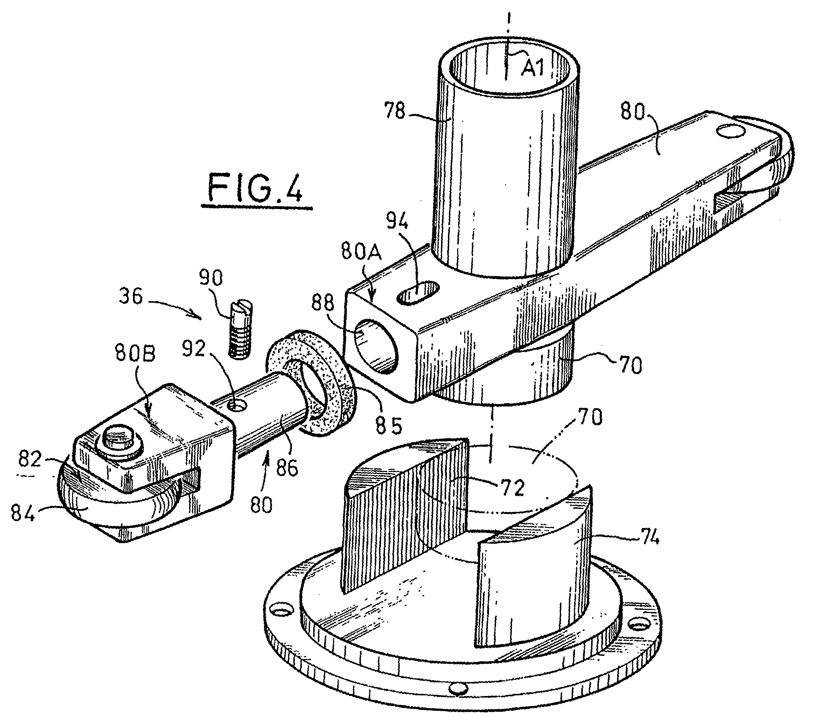

On a représenté sur les figures 3 à 5 un deuxième mode de réalisation de l'invention. Sur ces figures, des éléments similaires ou identiques à ceux décrits et représentés sur les figures 1 et 2 sont désignés par les mêmes chiffres de référence.

Dans ce deuxième mode de réalisation de l'invention, à la différence du premier, nous allons voir que la came 48 est fixe à l'intérieur du corps de palier 14 et que le suiveur de came 36 est complètement solidaire de l'arbre d'entraînement 10, y compris en rotation autour de l'axe A1 de celui-ci.

Tout comme dans le premier mode de réalisation de l'invention, l'arbre 10 est monté pivotant autour du centre C d'une liaison à rotule 26 agencée dans un manchon cylindrique 24 à l'extrémité supérieure d'un boîtier supérieur 22 du corps de palier 14.

Toutefois, le mouvement de l'arbre 10 par rapport au corps de palier 14 est limité à un mouvement plan dans un plan vertical contenant l'axe A0 de référence. A cet effet, une bague tournante 70 est montée à rotation autour de l'axe A1 de l'arbre 10, à l'extrémité inférieure 38 de celui-ci, et elle est reçue entre deux faces parallèles en vis-à-vis 72 de deux plots 74 de guidage qui sont montés sur la paroi transversale de fond 54 du boîtier inférieur 20 du corps de palier 14.

Les faces en vis-à-vis 72 des plots 74 s'étendent dans un plan vertical et sont écartées l'une de l'autre d'une distance sensiblement égale au diamètre de la bague tournante 70 de manière à imposer à celle-ci une trajectoire plane selon une direction A2 autour du point de pivotement C.

Ainsi, comme dans le premier mode de réalisation de l'invention, l'arbre 10 est limité à un mouvement de pivotement par rapport au corps de palier 14 autour de l'axe fixe A3 tel qu'il a été défini plus haut.

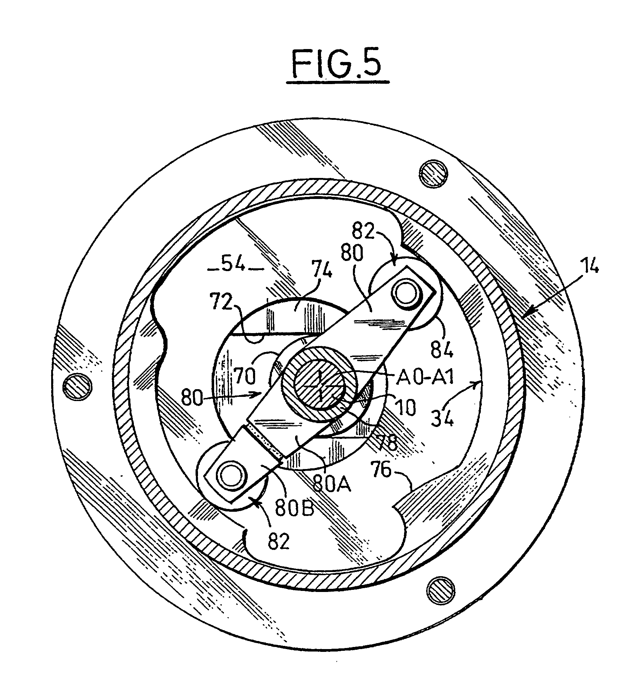

Comme on peut le voir plus particulièrement sur les figures 3 et 5, la came 48 qui est fixe par rapport au boîtier inférieur 20 possède un profil 34 formé d'une surface cylindrique qui n'est pas de révolution, le profil de la came étant déterminé par un plus ou moins grand éloignement de cette surface latérale 76 par rapport à l'axe A0 de référence, selon une direction radiale par rapport à l'axe A1, en fonction de la position angulaire de la partie de la surface latérale 76 considérée autour de cet axe.

Le suiveur de came 36 solidaire de l'arbre d'entraînement 10 comporte essentiellement un fourreau tubulaire 78 entourant la partie inférieure 32 de l'arbre 10 et deux bras transversaux 80 qui s'étendent perpendiculairement à l'axe A1, à l'extrémité inférieure du fourreau 78. Les bras transversaux 80 sont diamétralement opposés par rapport à l'axe A1 et ils portent à leur extrémité libre chacun un galet 82 qui est destiné à venir en contact avec la surface latérale 76 de la came 48 formant profil de came 34.

Cette surface latérale 76 est définie de telle sorte que deux points diamétralement opposés par rapport à l'axe A1 de la surface 76 sont séparés d'une distance constante mais ne sont pas forcément symétriques par rapport à l'axe de référence A0.

Ainsi, les galets 82 étant agencés à distances égales de l'axe A1 de l'arbre 10, lorsqu'ils suivent la surface latérale 76, ils provoquent un déplacement de l'extrémité inférieure 38 de l'arbre 10, déplacement qui ne peut bien entendu se faire que dans le plan défini par les faces en vis-à-vis 72 des plots de guidage 74.

Le fait d'utiliser une came 48 dont le profil n'est pas circulaire permet de définir avec précision la loi de variation de l'inclinaison de l'axe A1 de l'arbre 10 en fonction de la position angulaire de celui-ci autour de son axe A1. On peut ainsi adapter cette loi de variation pour obtenir une compensation optimale de l'orientation de la lame d'essuyage par rapport à la vitre, en fonction du galbe de celle-ci.

Par ailleurs, de manière à pouvoir rattraper les jeux de fonctionnement et de manière à compenser d'éventuelles imperfections géométriques de la surface de came 76, l'un au moins des bras transversaux 80 est réalisé en deux parties, radiale interne 80A et radiale externe 80B, une rondelle élastique 85 étant interposée entre les deux pour permettre une légère adaptation de la longueur du bras 80 selon la direction radiale par rapport à l'axe A1.

A cet effet, la partie radiale externe 80B du bras 80 comporte une tige cylindrique 86 qui s'étend radialement vers l'intérieur et qui est destinée à être reçue dans un alésage complémentaire 88 de la partie radiale interne 80A du bras 80. Une vis de blocage 90 est destinée à être vissée dans un orifice correspondant 92 de la tige 86, la tête de la vis 90 dépassant à l'extérieur de la tige 86 et étant reçue à l'intérieur d'une lumière 94 de la partie radiale interne 80A du bras transversal 80 de manière à interdire tout pivotement relatif des deux parties 80A, 80B du bras transversal tout en permettant un coulissement selon la direction transversale du bras 80.

Comme on peut le voir sur les figures 3 à 5, les galets 82 sont articulés autour d'axes parallèles à l'axe A1 de l'arbre 10 et leur surface latérale 84 est bombée.

Ainsi, lorsque les galets 82 suivent le profil de came 34 en fonction de leur position angulaire autour de l'axe A1, celui-ci s'incline progressivement d'un angle α par rapport à l'axe A0 de référence.

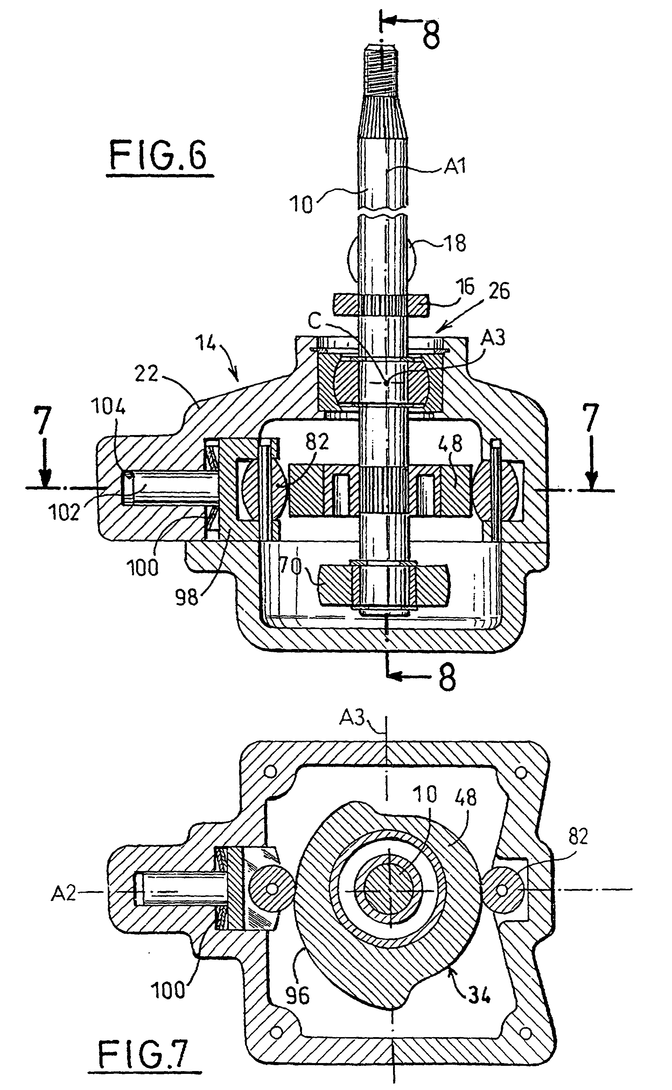

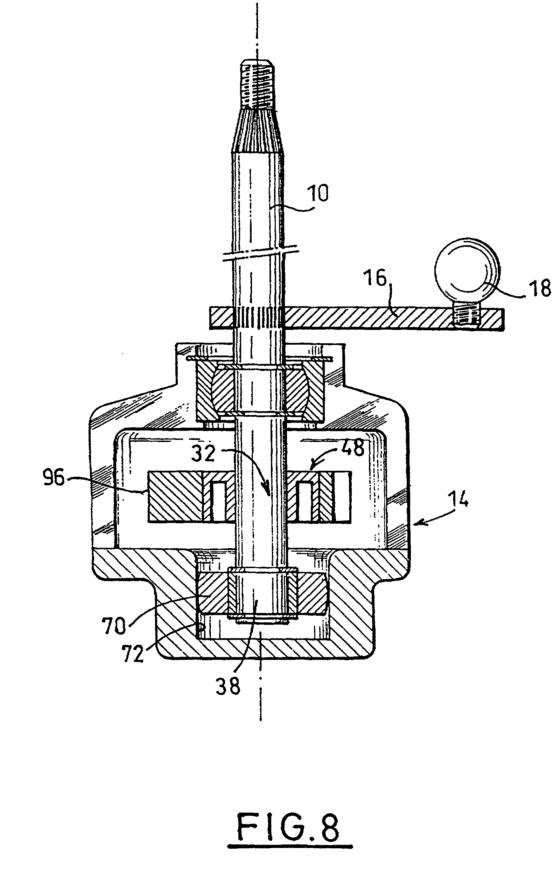

On a représenté sur les figures 6 à 8 un troisième mode de réalisation de l'invention qui diffère du deuxième en ce que la came 48 est portée par l'arbre d'entraînement 10 et tourne avec celui-ci autour de son axe A1 tandis que les galets 84 sont portés par le corps de palier 14.

Comme on peut le voir sur ces figures, la came 48 est en effet montée sur la partie inférieure 32 de l'arbre 10 et elle comporte une surface latérale externe cylindrique mais non de révolution 96 qui forme le profil de came 34. Ce profil de came 34 non circulaire est également défini de telle manière que deux points diamétralement opposés par rapport à l'axe A1 de la surface latérale externe 96 sont écartés d'une distance constante mais ne sont pas forcément symétriques par rapport à l'axe A1.

Comme dans le deuxième mode de réalisation de l'invention qui vient d'être décrit, l'extrémité inférieure 38 de l'arbre 10 porte une bague tournante 70 qui est guidée selon une direction transversale A2 de manière à limiter le mouvement de l'arbre 10 par rapport au corps de palier 14 à un mouvement plan de pivotement autour de l'axe fixe A3 passant par le centre C de l'articulation à rotule 26.

La surface latérale externe 96 de la came 48 est en appui contre deux galets 82 en forme d'olives qui sont montés à rotation dans le boîtier supérieur 22 autour d'axes parallèles à l'axe A0 de référence et qui sont agencés dans le plan de déplacement de l'arbre 10. Pour rattraper les jeux de fonctionnement et pour compenser d'éventuelles imperfections géométriques du profil de came 34, l'un des galets 82 est monté dans une chape 98 qui est mobile selon la direction A2, et qui est sollicitée en direction de la came 48 par des moyens de rappel élastiques 100.

A cet effet, la chape 98 comporte une tige 102 qui est parallèle à la direction A2 et qui est guidée dans un alésage correspondant 104 formé dans le boîtier supérieur 22.

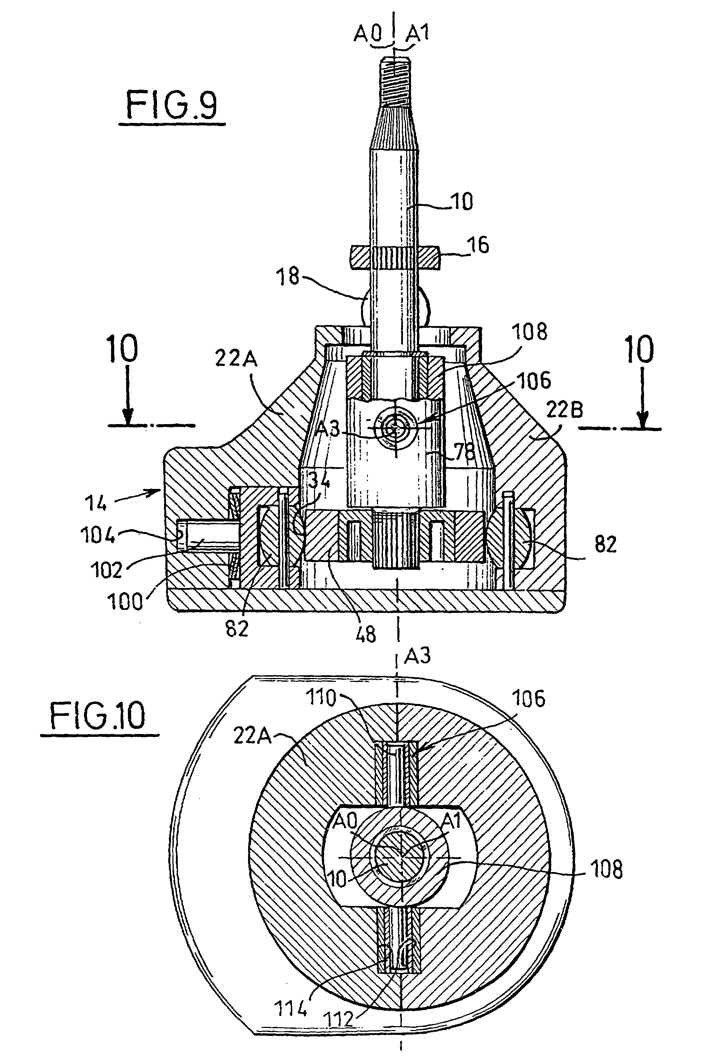

On a représenté sur les figures 9 et 10 un quatrième mode de réalisation de l'invention qui diffère du troisième par les moyens de guidage de l'arbre d'entraînement 10, mais qui utilise le même dispositif à came pour déterminer l'inclinaison de l'arbre 10.

En effet, dans ce quatrième mode de réalisation, l'arbre 10 n'est pas monté dans le corps de palier 14 par une articulation à rotule combinée avec un guidage plan, mais par une simple liaison pivot 106 d'axe A3.

A cet effet, l'arbre 10 est monté à rotation autour de son axe A1 à l'intérieur d'un fourreau 108, lui-même d'axe A1, et le fourreau 108 comporte deux tiges transversales 110 d'axe A3 diamétralement opposées qui sont reçues, par l'intermédiaire de douilles antifriction 112, dans des logements complémentaires 114 du corps de palier 14 pour assurer le montage pivotant de l'arbre 10.

Un tel montage nécessite toutefois de réaliser le boîtier supérieur 22 du corps de palier 14 en deux parties 22A, 22B séparées selon un plan vertical passant par l'axe A3.

## Revendications

1. Dispositif d'essuyage d'une vitre de véhicule automobile, du type dans lequel un essuie-glace est monté à l'extrémité supérieure (12) d'un arbre d'entraînement (10) qui est entraîné en rotation alternée, dans un corps de palier (14), autour de son axe (A1) par un dispositif moteur, du type dans lequel il est prévu un dispositif (34, 36) pour faire varier l'inclinaison (α) de l'axe de l'arbre (10) par rapport à un axe de référence (A0) sensiblement perpendiculaire au plan de la vitre, et du type dans lequel l'arbre d'entraînement (10) est monté pivotant autour d'au moins un axe (A3) qui est perpendiculaire à l'axe (A1) de l'arbre (10), et dans lequel il est prévu un dispositif à came (34, 36) qui commande le pivotement de l'arbre d'entraînement (10) pour faire varier l'inclinaison (α) de l'axe (A1) de l'arbre (10) par rapport à l'axe de référence (A0) en fonction de la position de l'arbre (10) autour de son axe de rotation (A1),
**caractérisé en ce en ce que** l'arbre (10) est monté pivotant autour d'un axe fixe unique (A3) qui est perpendiculaire à l'axe (A1) de l'arbre (10), et en ce qu'il est prévu des moyens (52, 70) de guidage complémentaire de l'arbre (10) qui limitent le pivotement de l'arbre (10) dans le corps de palier (14) à un pivotement dans un plan contenant l'axe (A0) de référence.

2. Dispositif d'essuyage selonla revendication 1, **caractérisé en ce que** l'arbre (10) porte un suiveur de came (36) qui est monté à rotation par rapport à l'arbre (10) autour de l'axe (A1) de l'arbre (10) et qui est immobilisé en rotation autour de cet axe (A1) par rapport au corps de palier (14), et **en ce que** le suiveur de came (36) est en appui contre une surface de came (34) qui est mobile en rotation dans le corps de palier (14) et dont les déplacements sont commandés en fonction de la rotation de l'arbre (10) autour de son axe (A1).

3. Dispositif d'essuyage selon la revendication 2, **caractérisé en ce que** la surface de came (34) est portée par un disque (40) qui est monté à rotation dans le corps de palier (14) autour de l'axe de référence (AD).

4. Dispositif d'essuyage selon l'une des revendications 2 ou 3, **caractérisé en ce que** la surface de came (34) possède un profil variable selon la position angulaire autour de l'axe de référence (A0).

5. Dispositif d'essuyage selon l'une des revendications 2 à 4, **caractérisé en ce que** le suiveur de came (36) comporte un levier (50) qui est monté à rotation à l'extrémité inférieure (38) de l'arbre d'entraînement (10), perpendiculairement à l'axe (A1) de l'arbre (10), qui est guidé dans le corps de palier (14) selon une trajectoire contenue dans un plan parallèle à l'axe de référence (A0), et dont une extrémité libre (56) est en appui contre la surface de came (34).

6. Dispositif d'essuyage selon la revendication 3, **caractérisé en ce que** l'arbre d'entraînement (10) comporte un maneton (62) perpendiculaire à l'extrémité libre duquel est agencé un doigt d'entraînement (60) qui est destiné à être reçu dans une lumière (64) de direction radiale du disque support (40) de la surface de came (34) de manière à entraîner le disque (40) en rotation autour de l'axe de référence (A0) en fonction de la position de l'arbre (10) autour de son axe (A1).

7. Dispositif d'essuyage selon la revendication 1, **caractérisé en ce que** le dispositif à came possède une surface de came (34) qui est portée par le corps de palier (14), **en ce que** son profil varie selon une direction radiale par rapport à l'axe de référence (A0), et **en ce que** l'arbre d'entraînement (10) porte un suiveur de came (36) qui s'appuie en au moins deux points (82) sur la surface de came (34).

8. Dispositif d'essuyage selon la revendication 7, **caractérisé en ce que** le suiveur de came (36) comporte deux points d'appui (82) diamétralement opposés par rapport à l'axe de rotation (A1) de l'arbre (10).

9. Dispositif d'essuyage selon la revendication 8, **caractérisé en ce qu'**il comporte deux galets (82) diamétralement opposés par rapport à l'axe de référence (A0).

10. Dispositif d'essuyage selonla revendication 1, **caractérisé en ce que** le dispositif à came possède une surface de came (34) qui est montée fixe sur l'arbre (10) de manière à tourner avec lui autour de son axe (A1), **en ce que** le profil de la surface de came (34) varie selon la direction radiale de l'arbre (10) en fonction de la position angulaire de la portion de surface de came (34) considérée autour de l'axe (A1) de l'arbre (10), et **en ce que** la surface de came (34) est en appui contre au moins deux point fixes par rapport au corps de palier (14).

11. Dispositif d'essuyage selon la revendication 10, **caractérisé en ce que** la surface de came (34) est en appui contre des galets (82) qui sont montés à rotation par rapport au corps de palier (14) autour d'un axe sensiblement parallèle à l'axe de référence (A0).

12. Dispositif d'essuyage selon l'une quelconque des revendications 9 à 11, **caractérisé en ce que** l'un au moins des galets (82) est monté mobile selon une direction sensiblement perpendiculaire à la surface de came (82), et **en ce que** le galet (82) est sollicité par des moyens de rappel élastique (85, 100) en direction de la surface de came (34).

13. Dispositif d'essuyage selon la revendication 1, **caractérisé en ce que** l'arbre d'entraînement (10) est monté dans le corps de palier (14) par l'intermédiaire d'une articulation à rotule (26).

14. Dispositif d'essuyage selon la revendication 1, **caractérisé en ce que** l'arbre d'entraînement (10) est monté dans le corps de palier (14) par l'intermédiaire d'une liaison à pivot (106) autour dudit axe fixe unique (A3).

## Claims

1. Device for wiping a motor vehicle window, of the type in which a wiper is mounted at the upper end (12) of a drive shaft (10) which is driven in alternating rotation, in a bearing body (14), about its axis (A1) by a drive device, of the type in which a device (34, 36) is provided for varying the inclination (α) of the axis of the shaft (10) with respect to a reference axis (A0) substantially perpendicular to the plane of the window, and of the type in which the drive shaft (10) is mounted so as to pivot about at least one axis (A3) which is perpendicular to the axis (A1) of the shaft (10), and in which there is a provided a cam device (34, 36) which controls the pivoting of the drive shaft (10) in order to vary the inclination (α) of the axis (A1) of the shaft (10) with respect to the reference axis (A0) according to the position of the shaft (10) about its rotation axis (A1),
**characterised in that** the shaft (10) is mounted so as to pivot about a single fixed axis (A3) which is perpendicular to the axis (A1) of the shaft (10), and **in that** complementary means (52, 70) for guiding the shaft (10) are provided, which limit the pivoting of the shaft (10) in the bearing body (14) to a pivoting in a plane containing the reference axis (A0).

2. Wiping device according to Claim 1, **characterised in that** the shaft (10) carries a cam follower (36) which is mounted for rotation with respect to the shaft (10) about the axis (A1) of the shaft (10) and which is immobilised in rotation about this axis (A1) with respect to the bearing body (14), and **in that** the cam follower (36) is in abutment against a cam surface (34) which is able to move in rotation in the bearing body (14) and whose movements are controlled according to the rotation of the shaft (10) about its axis (A1).

3. Wiping device according to Claim 2, **characterised in that** the cam surface (34) is carried by a disc (40) which is mounted for rotation in the bearing body (14) about the reference axis (A0).

4. Wiping device according to one of Claims 2 or 3, **characterised in that** the cam surface (34) has a profile which is variable according to the angular position around the reference axis (A0).

5. Wiping device according to one of Claims 2 to 4, **characterised in that** the cam follower (36) has a lever (50) which is mounted for rotation at the bottom end (38) of the drive shaft (10), perpendicularly to the axis (A1) of the shaft (10), which is guided in the bearing body (14) on a path contained in a plane parallel to the reference axis (A0), and a free end (56) of which is in abutment against the cam surface (34).

6. Wiping device according to Claim 3, **characterised in that** the drive shaft (10) has a crankpin (62), perpendicular to the free end of which there is arranged a drive finger (60) which is intended to be received in an aperture (64) of radial direction in the support disc (40) of the cam surface (34) so as to drive the disc (40) in rotation about the reference axis (A0) according to the position of the shaft (10) about its axis (A1).

7. Wiping device according to Claim 1, **characterised in that** the cam device has a cam surface (34) carried by the bearing body (14), **in that** its profile varies along a radial direction with respect to the reference axis (A0), and **in that** the drive shaft (10) carries a cam follower (36) which bears at at least two points (82) on the cam surface (34).

8. Wiping device according to Claim 7, **characterised in that** the cam follower (36) has two bearing points (82) which are diametrically opposed with respect to the rotation axis (A1) of the shaft (10).

9. Wiping device according to Claim 8, **characterised in that** the device has two rollers (82) which are diametrically opposed with respect to the reference axis (A0).

10. Wiping device according to Claim 1, **characterised in that** the cam device has a cam surface (34) which is mounted fixed on the shaft (10) so as to rotate with it about its axis (A1), **in that** the profile of the cam surface (34) varies in the radial direction of the shaft (10) according to the angular position of the cam surface portion (34) in question about the axis (A1) of the shaft (10), and **in that** the cam surface (34) is in abutment against at least two points which are fixed with respect to the bearing body (14).

11. Wiping device according to Claim 10, **characterised in that** the cam surface (34) is in abutment against rollers (82) which are mounted for rotation with respect to the bearing body (14) about an axis substantially parallel to the reference axis (A0).

12. Wiping device according to any one of Claims 9 to 11, **characterised in that** at least one of the rollers (82) is mounted so as to be able to move in a direction substantially perpendicular to the cam surface (82), and **in that** the roller (82) is acted on by elastic return means (85, 100) in the direction of the cam surface (34).

13. Wiping device according to Claim 1, **characterised in that** the drive shaft (10) is mounted in the bearing body (14) by means of a swivel articulation (26).

14. Wiping device according to Claim 1, **characterised in that** the drive shaft (10) is mounted in the bearing body (14) by means of a connection with a pivot (106) about the said single fixed axis (A3).

## Patentansprüche

1. Wischvorrichtung zum Wischen einer Kraftfahrzeugscheibe, bei der ein Scheibenwischer am oberen Ende (12) einer Antriebswelle (10) angebracht ist, die in einem Lagerkörper (14) in einer Pendeldrehbewegung um ihre Achse (A1) durch eine Antriebsvorrichtung angetrieben wird, und bei der eine Vorrichtung (34, 36) vorgesehen ist, um die Neigung (α) der Achse der Antriebswelle (10) im Verhältnis zu einer zur Ebene der Scheibe in etwa senkrechten Bezugsachse (A0) zu verändern, wobei die Antriebswelle (10) schwenkbar um wenigstens eine Achse (A3) gelagert ist, die senkrecht zur Achse (A1) der Antriebswelle (10) verläuft, und wobei eine Nockenvorrichtung (34, 36) vorgesehen ist, die die Schwenkbewegung der Antriebswelle (10) betätigt, um die Neigung (α) der Achse (A1) der Antriebswelle (10) im Verhältnis zur Bezugsachse (A0) in Abhängigkeit von der Position der Antriebswelle (10) um ihre Drehachse (A1) zu verändern,
**dadurch gekennzeichnet, daß** die Antriebswelle (10) schwenkbar um eine einzige ortsfeste Achse (A3) gelagert ist, die senkrecht zur Achse (A1) der Antriebswelle (10) verläuft, und daß Mittel (52, 70) zur formschlüssigen Führung der Antriebswelle (10) vorgesehen sind, die die Schwenkung der Antriebswelle (10) im Lagerkörper (14) auf eine Schwenkung in einer die Bezugsachse (A0) enthaltenden Ebene begrenzen.

2. Wischvorrichtung nach Anspruch 1, **dadurch gekennzeichnet, daß** die Antriebswelle (10) ein Nockenfolgeelement (36) trägt, das im Verhältnis zur Antriebswelle (10) drehbar um die Achse (A1) der Antriebswelle (10) gelagert ist und das im Verhältnis zum Lagerkörper (14) gegen Verdrehung um diese Achse (A1) gesichert ist, und daß das Nockenfolgeelement (36) an einer Nockenfläche (34) anliegt, die drehbeweglich im Lagerkörper (14) ist und deren Bewegungen in Abhängigkeit von der Drehung der Antriebswelle (10) um ihre Achse (A1) gesteuert werden.

3. Wischvorrichtung nach Anspruch 2, **dadurch gekennzeichnet, daß** die Nockenfläche (34) an einer Scheibe (40) angebracht ist, die im Lagerkörper (14) drehbar um die Bezugsachse (A0) gelagert ist.

4. Wischvorrichtung nach einem der Ansprüche 2 oder 3, **dadurch gekennzeichnet, daß** die Nockenfläche (34) ein nach Maßgabe der Winkelposition um die Bezugsachse (A0) veränderliches Profil besitzt.

5. Wischvorrichtung nach einem der Ansprüche 2 bis 4, **dadurch gekennzeichnet, daß** das Nockenfolgeelement (36) einen Hebel (50) umfaßt, der drehbar am unteren Ende (38) der Antriebswelle (10), senkrecht zur Achse (A1) der Antriebswelle (10) gelagert ist, der im Lagerkörper (14) entlang einer Bahn geführt ist, die in einer zur Bezugsachse (A0) parallelen Ebene enthalten ist, und von dem ein freies Ende (56) an der Nockenfläche (34) anliegt.

6. Wischvorrichtung nach Anspruch 3, **dadurch gekennzeichnet, daß** die Antriebswelle (10) einen senkrechten Zapfen (62) umfaßt, an dessen freiem Ende ein Antriebsfinger (60) angeordnet ist, der dazu bestimmt ist, in einem in radialer Richtung ausgeführten Schlitzloch (64) der Trägerscheibe (40) der Nockenfläche (34) aufgenommen zu werden, um die Scheibe (40) in Abhängigkeit von der Position der Antriebswelle (10) um ihre Achse (A1) drehend um die Bezugsachse (A0) anzutreiben.

7. Wischvorrichtung nach Anspruch 1, **dadurch gekennzeichnet, daß** die Nockenvorrichtung eine Nockenfläche (34) besitzt, die am Lagerkörper (14) angebracht ist, daß sich ihr Profil entlang einer radialen Richtung im Verhältnis zur Bezugsachse (A0) verändert und daß die Antriebswelle (10) ein Nockenfolgeelement (36) trägt, das in wenigstens zwei Punkten (82) auf der Nockenfläche (34) anliegt.

8. Wischvorrichtung nach Anspruch 7, **dadurch gekennzeichnet, daß** das Nockenfolgeelement (36) zwei im Verhältnis zur Drehachse (A1) der Antriebswelle (10) diametral gegenüberliegende Auflagepunkte (82) umfaßt.

9. Wischvorrichtung nach Anspruch 8, **dadurch gekennzeichnet, daß** sie zwei im Verhältnis zur Bezugsachse (A0) diametral gegenüberliegende Rollen (82) umfaßt.

10. Wischvorrichtung nach Anspruch 1, **dadurch gekennzeichnet, daß** die Nockenvorrichtung eine Nockenfläche (34) besitzt, die ortsfest auf der Antriebswelle (10) angebracht ist, so daß. sie sich mit dieser um ihre Achse (A1) dreht, daß sich das Profil der Nockenfläche (34) entlang der radialen Richtung der Antriebswelle (10) in Abhängigkeit von der Winkelposition der betreffenden Nockenteilfläche (34) um die Achse (A1) der Antriebswelle (10) verändert und daß die Nockenfläche (34) an wenigstens zwei im Verhältnis zum Lagerkörper (14) ortsfesten Punkten (14) anliegt:

11. Wischvorrichtung nach Anspruch 10, **dadurch gekennzeichnet, daß** die Nockenfläche (34) an Rollen (82) zur Anlage kommt, die im Verhältnis zum Lagerkörper (14) drehbar um eine zur Bezugsachse (A0) in etwa parallele Achse gelagert sind.

12. Wischvorrichtung nach einem der Ansprüche 9 bis 11, **dadurch gekennzeicnet, daß** wenigstens eine der Rollen (82) entlang einer zur Nockenfläche (34) in etwa senkrechten Richtung beweglich gelagert ist und daß die Rolle (82) durch elastische Rückstellmittel (85, 100) in Richtung der Nockenfläche (34) zurückgestellt wird.

13. Wischvorrichtung nach Anspruch 1, **dadurch gekennzeichnet, daß** die Antriebswelle (10) im Lagerkörper (14) über ein Kugelgelenk (26) gelagert ist.

14. Wischvorrichtung nach Anspruch 1, **dadurch gekennzeichnet, daß** die Antriebswelle (10) im Lagerkörper (14) über eine Drehzapfenverbindung (106) um die besagte einzige ortsfeste Achse (A3) herum gelagert ist.
